# EUROPEAN PATENT APPLICATION

(11) **EP 4 736 986 A1**
(43) Date of publication of application: **06.05.2026**
(21) Application number: 24210218.4
(22) Date of filing: 31.10.2024
(51) Int. Cl.: B01D 39/16, B01D 46/00, B01D 53/34

(54) **METHOD FOR PRODUCING A FILTER MEDIUM CONTAINING ABSORBENT PARTICLES AND FILTER MEDIUM CONTAINING ADSORBENT PARTICLES**

(71) Applicant: Ahlstrom Oyj, 02150 Espoo (FI)
(72) Inventor: Prost, Claire, 69007 Lyon (FR); Ambrosini, Cristiano, 10131 Torino (IT)
(74) Representative: Pfenning, Meinig & Partner mbB

(57) **Abstract**

The present invention relates to a method for producing a filter medium containing absorbent particles and a filter medium containing absorbent particles. According to the present invention the filter medium comprises at least two nonwoven layers and adhesive particles, wherein the at least two nonwoven layers and/or the adhesive particles are bonded to each other different adhesives, i.e. a liquid and a solid adhesive which chemically can be different. The present invention allows for the production of filter media

## Description

The present invention relates to a method for producing a filter medium containing absorbent particles and a filter medium containing absorbent particles. According to the present invention the filter medium comprises at least two nonwoven layers and adhesive particles, wherein the at least two nonwoven layers and/or the adhesive particles are bonded to each other different adhesives, i.e. a liquid and a solid adhesive which chemically can be different. The present invention allows for the production of filter media

Generally, methods of producing filter media containing adsorbent particles are known from the prior art.

For example, glue powder can be mixed with activated carbon which mixture is scattered onto a support layer whereafter a further layer (e.g., an efficiency layer) may be placed on top to sandwich the activated carbon particles (referred to as "full glue powder configuration"). Then, heat and pressure is introduced (e.g. via a belt press) to melt the glue powder and allow the activated carbon particles to adhere to the support layer.). The produced filter media have good carbon adhesion, good gas adsorption performances and limited thickness.

According to an alternative known procedure a liquid glue is sprayed onto the support layer. Adsorbent particles, for example activated carbon powder, is dry-scattered onto the support layer. Additional glue is sprayed and a further layer is placed on the top. The glue needs to cure and set in order to ensure good adhesion of the adsorbent particles, for example activated carbon powder (referred to as "full glue spray configuration"). The produced filter media exhibit the possibility to laminate on-line efficiency layer and stable charge/ efficiency.

However, the filter media produced from a "full glue spray configuration process" has the following disadvantages:
- High product thickness and costly machine investment involving multiple scattering and multiple glue spray units to produce media with large amounts of activated carbon.
- Adsorbent media with high amounts of activated carbon need to be produced in multiple steps with at least 48h curing time in between to ensure good adsorbent adhesion.
- Limited production line layout flexibility due to very short open time of the glue (sticking time)

In case of filter media produced from a "full glue powder configuration", the other following disadvantages can be listed:
- When additional layers are added, especially for the case of a charged efficiency layer, the layer may get discharged when passing in the belt press due to exposure to high temperature
- Significant pressure needs to be applied in the belt-press to get good adhesion of adsorbent particles with each other's and with additional structural/ efficiency layers this led to a compressed media with rather low air permeability
- Limited heat resistance due to low melting point of the glue powder

WO 2024/038421 A1describes the use of a thick nonwoven support layer with a highly porous first (top) surface and a tighter (bottom) surface. The nonwoven is positioned with the open, porous surface facing up. Activated carbon powder is dry-scattered onto the support and falls into the pores of the nonwoven. The tighter pores of the bottom surface prevent the carbon powder from falling out. Little to no glue is used in this process. Additional layers are laminated with minimal glue above (and may also be added below) to prevent any carbon particles from falling out. The process also requires high pressure (via a belt press) to ensure the carbon particles are kept inside the porous substrate. The resulting media is very thick.

WO 2024/038421 A1discloses the production of a filter medium containing up to 700 g/m² thanks to the usage of fibrous container. This usage of fibrous container does introduce however some limitations in terms of maximum roll length in the final media being maximum 200 linear meters whereas standard requirements from our customers in mass production require rolls of ca. 400-500 linear meters. More precisely the limitation is due to the high thickness of the nonwoven container and to the maximum material length standing on the pallet (shipping/ handling of incoming good materials). On top of that, the described process ensures the adhesion of adsorbents inside the filter medium by applying high pressure in a belt press. It leads to final medium with limited air permeabilities that are an issue for certain targeted air filtration applications like cabin air applications and HVAC applications.

Accordingly, the present invention intends to produce adsorbent containing media with advanced properties. Thanks to this invention, it is possible to produce adsorbent-containing media from 150 g/m² up to 1000 g/m² for a broad range of applications like Combi Cabin Air media, Molecular HVAC, Fuel Cell Air Intake media Molecular Clean Room, Airborne Molecular Contamination (AMC), kitchen hoods, Face masks or Air purifiers meeting target properties in terms of air permeability, particulate filtration efficiency and gas adsorption as well as with a minimized quantity of glue, minimized number of glue spraying units and with good adhesion of adsorbent particles together and with structural layers.

According to a first aspect, the present invention is related to a method for producing a filter medium containing adsorbent particles, comprising the following steps:
providing a first nonwoven support layer,
applying adsorbent particles onto a first surface of the first nonwoven support layer,
subsequently applying a second porous layer with a first surface thereof onto the first surface of the first nonwoven support layer to form a package of layers, and subsequently
joining the first nonwoven support layer and the second porous layer to form a stack of joint layers,
wherein a solid adhesive and a liquid adhesive are applied to the first surface of the first nonwoven support layer, the adsorbent particles and/or the first surface of the second porous layer.

According to the present invention, after the adsorbent particles are provided onto the first surface of the first nonwoven support layer a second porous layer with a first surface thereof onto the first surface of the first nonwoven support, i.e. the first surface of the a second porous layer is brought into contact with the first surface of the first nonwoven support layer, thereby enclosing the adsorbent particles in between.

The term "package of layers" refers to the structure created (first layer- adsorbent- second layer), i.e. where the adsorbent is between the first layer and second layer. The layers, however are not bonded yet.

The term "stack of joint layers" refers to the product that results from the joining or bonding process. The first and second layer thus are bonded together by means of the adhesives, enclosing the adsorbent particles.

If no additional step is involved after the formation of the stack of joint layers, this stack is equal to the filter medium. However, if additional steps are applied such as e.g. the addition of additional adhesive and/or the addition of another layer (e.g. another nonwoven layer) as described below in detail, the product resulting therefrom shall be the filter medium.

Accordingly, the present method involves a "hybrid" process, i.e. solid adhesive (e.g. a powder adhesive) plus a liquid adhesive are combinedly used to bond the adsorbent particles and/or the layers.

This invention solves the problem of producing adsorbent containing media keeping high level of particulate filtration efficiency as well as higher air permeability media. This result was not possible with a process in "full glue powder" configuration where charge of the efficiency layer was removed when being exposed to high temperature in the belt press and permeability too low due to high pressure applied in the belt press for adsorbent adhesion.

Versus process in "full glue spray", the inventive "hybrid gluing process" allows to produce media up to 1000 g/m² adsorbent containing media with only 1 glue spray units and 2 scattering units whereas in "PUR full spray" configuration it is needed to have minimum 6 spraying units and 5 scattering units to produce media with 800-1000 g/m² of adsorbents.

The present invention allows to reach good adhesion without discharging the efficiency layer and without reducing permeability of final media; it also allowed to limit total line investment and dimension.

For example and according to a preferred embodiment, the adsorbent particles and solid adhesive, i.e. the glue powder mixture gets scattered on the nonwoven layer; this enters into the belt press where the glue powder melts and at the outlet of the press the efficiency later gets laminated via PUR glue sprayed on the adsorbent particles or on the efficiency layer itself.

The method according to the present invention can be carried out according to the following advantageous embodiments:
In a first preferred embodiment the solid adhesive and the liquid adhesive differ in their chemical composition.

Further, the solid adhesive can be applied in powder form, with a preferred mean particle size from 100 to 800 µm, especially preferred 250 to 700 µm, measured according to DIN ISO 4610:2002 standard.

In addition the solid adhesive preferably is selected form the group consisting of thermoplastic adhesives, which preferably are selected from the group consisting of ethylene-vinyl-acetate (EVA) adhesives, copolyester adhesives, co-polyamide adhesives, thermoplastic urethane (TPU) adhesives and mixtures and combinations of the aforementioned adhesives.

The liquid adhesive especially is selected from the group consisting of PUR adhesives, polyolefin adhesives and mixtures and combinations of the aforementioned adhesives.

According to another preferred embodiment the adsorbent particles and the solid adhesive, especially in powder form, are mixed to form a mixture and said mixture being applied onto the first surface of the first nonwoven support layer.

According to a further specific embodiment, the adsorbent particles are selected from the group consisting of activated carbon particles, impregnated activated carbon particles, activated carbon with additional catalytic treatment, ion exchange resin particles, silica particles, zeolite particles, molecular sieve particles, clay, alumina, sodium bicarbonate, catalyst particles (e.g. KMnO₄ or KI and metal-based catalyst), or a combination thereof.

Preferably, the adsorbent particles have a particle size from 30 to 60 mesh.

The adsorbent particles preferably have a density in between 400 and 800 kg/m³, more preferably 450 to 780 kg/m³, especially preferred 460 to 750 kg/m³, measured according to ASTM D2854-09.

According to yet another preferred embodiment the adsorbent particles have a CTC value from 45 to 60%, preferably 50 to 55%, measured according to ASTM D5742-16.

The adsorbent particles preferably are applied in an amount of 100 to 1100 g/m², preferably 200 to 700 g/m².

In an advantageous embodiment the solid adhesive is applied in an amount of 1 wt.-% to 50 wt.-%, preferably 2 wt.-% to 30 wt.-%, especially 5 to 15 wt.-% of an amount of the adsorbent particles.

Especially preferred the liquid adhesive is applied in an amount of 1 to 50 g/m², preferably 5 to 20 g/m², especially preferred 8 to 15 g/m².

It is also possible to after the adsorbent particles are applied onto a first surface of the first nonwoven support layer, preferably together with the solid adhesive as a mixture, additional solid adhesive is applied onto the first surface of the first nonwoven support layer.

According to a specifically preferred embodiment of the present invention before applying the second porous layer with its first surface onto the first surface of the first nonwoven support layer the adhesive application and activation steps are carried out in the following manner:
i. the adsorbent particles are applied together with the solid adhesive as a mixture onto a first surface of the first nonwoven support layer,
ii. optionally, additional solid adhesive is applied onto a first surface of the first nonwoven support layer,
iii. the first nonwoven support layer is treated with pressure and/or elevated temperatures sufficient to activate the solid adhesive,
iv. the liquid adhesive is applied onto the first surface of the first nonwoven support layer and/or on a first surface of a second porous layer.Optionally a release paper can be used prior to step iii. which can subsequently be removed prior to step iv.

The process described in the foregoing will preferably consist of a dry scattering section, where at least one of the scattering units is scattering a mixture of adsorbent particles (e.g. activated carbon) and solid adhesive (glue powder). There may be further one or more scattering units after this which are scattering only solid adhesive. After the solids are scattered on the support layer, the nonwoven preferably goes into a belt press section, where less pressure compared to processes known from the prior art, more specifically less pressure when compared to the full glue powder process or no pressure (e.g. only heat) is used on the belt press. Finally, there is a glue spraying step for the application of the liquid glue just after the belt press, with an additional second layer placed on top after the glue is sprayed.

It is also possible to have an additional glue spray step before the scattering section. So, while the preferred option is to have glue spray after the press, it is also possible to apply liquid adhesive before the application of the solid adhesive and the adsorbent particles.

3. According to an alternative, yet equally preferred embodiment the method according to the present invention the adhesive application and activation steps are carried out in the following manner and order:
i. the adsorbent particles are applied together with the solid adhesive as a mixture onto a first surface of the first nonwoven support layer,
ii. the liquid adhesive is sprayed onto the first surface of the first nonwoven support layer prior to and/or subsequent to the application of the mixture of the solid adhesive and the adsorbent particles,
iii. the second porous layer with a first surface thereof onto the first surface of the first nonwoven support layer to form a package of layers,
iv. the package is treated with pressure and/or elevated temperatures sufficient to activate the solid adhesive to join the first nonwoven support layer and the second porous layer to form a stack of joint layers.

Preferably, the elevated temperatures applied in the method are chosen from a range of 150 °C or above, preferably 150 °C to 250 °C, especially preferred 170 to 230 °C.

The application of pressure can be conducted by means of a belt press and/or over a period of 5 to 300 s, preferably 7 to 180 s.

In case of a belt press, preferably a gap width between the belts in between 0.1 and 40 mm, preferably 2 and 30 mm is adjusted. The adjustment of the gap width leads to increased (small gap width) or lower (large gap width) pressures, respectively

Specifically, the first nonwoven support layer can be a spunbond nonwoven, preferably with a basis weight of 30 to 150 g/m², preferably 40 to 100 g/m².

The second porous layer preferably is a nonwoven, such as an efficiency layer, preferably a meltblown, electrospun, a needle-felt efficiency layer, a electrospun nanofiber layer, a charged spunbond. Alternatively, the second porous layer can also be a porous membrane such as e.g. a PTFE membrane.

Preferred needle-felt efficiency layer are electrically charged with basis weight from 40 to 110 gsm and may be especially preferably containing polypropylene (PP) and an air permeability ranging from 2000 to 6000 l/m²/s.

Preferred meltblown are electrically charged, more preferably made primarily of PP, have a basis weight of 10 to 30 g/m² and an air permeability from 200 to 3000 l/m²/s.

Moreover, after the the formation of the package of layers or the stack of joint layers at least one nonwoven efficiency layer can be applied either onto a second surface of the second porous layer being the surface of the second porous layer lying opposite to the layer which is joined with the first side of the first nonwoven support layer and/or onto a second surface of the first nonwoven support layer lying opposite of the first surface of the first nonwoven support layer.

It is also possible to apply, e.g. spray a liquid adhesive onto the second surface of the second porous layer and/or the second surface of the first nonwoven support layer, respectively, and joining the at least one nonwoven cover layer with the second surface of the second surface of the second porous layer and/or the second surface of the first nonwoven support layer, respectively and/or
bonding the nonwoven cover layer with the second surface of the second surface of the second porous layer and/or the second surface of the first nonwoven support layer, respectively. by spraying of liquid adhesive.

Moreover it is preferred that the nonwoven efficiency layer is a charged needlefelt or charged meltblown or a spunbond nonwoven.

In another aspect the present invention related to a filter medium containing adsorbent particles, comprising
a first nonwoven support layer,
a second porous layer with a first surface thereof onto a first surface of the first nonwoven support layer,
and adsorbent particles enclosed by and/or dispersed in the first nonwoven support layer and the second porous layer,
wherein the first nonwoven support layer, the second porous layer and the adsorbent particles are adhered together by at least two adhesives which differ in their chemical composition.

Main technical characteristics and advantages of the adsorbent containing media according to the present invention are:
1) better gas adsorption performance (characterized by lower gas breakthrough or higher breakthrough efficiency)
2) Media is more open and has better air permeability, leading to lower pressure drop and thus longer filter lifetime
3) Media is less thick than other prior art material containing large amounts of activated carbon. This allows for better processability and also, one can include more material in the final filter design (e.g. With more pleats of material fitting into the filter housing) and thus leading to large filtration area and even better performance.
4) Ability to have contain larger amounts of activated carbon than prior art.

According to preferred embodiments the filter medium is characterized by the following parameters:
a content of the adsorbent particles in between 100 to 1000 g/m², preferably 200 to 700 g/m².
a thickness in between 2000 and 3000 µm, preferably in between 2300 and 2900 µm, measured according to ISO 9073-2:1997,
an air permeability in between 700 and 1800 l/m²/s, preferably in between 900 and 1600 l/(m²·s), measured at 200 Pa according to the TAPPI Standard T 251 cm-85 ("Air Permeability of Porous Paper, Fabric and Pulp Handsheets") with 0.5 inch (12.7 mm),
a NaCl efficiency of > 60%, preferably > 80 %, measured according to DIN 71460-1 with 20 cm/s flow rate and the aerosol particle size is between 0.3-0.5 µm
a n-butane initial breakthrough of < 10%, preferably < 5% measured according to lSO10121-1:2015 with 10 cm/s face velocity and 80 ppm inlet gas concentration.

The density of the present filter medium according to the present invention preferably is less than 500 kg/m³, preferably less than 300 kg/m³, more preferably less than 225 kg/m³.

In yet another further development the filter medium according to the present invention comprises at least one nonwoven efficiency layer being present
on a second surface of the second porous layer being the surface of the second porous layer lying opposite to the layer which is joined with the first side of the first nonwoven support layer and/or
on a second surface of the first nonwoven support layer lying opposite of the first surface of the first nonwoven support layer.

Preferred applications of the inventive filter medium are parts of a combi cabin air media, molecular Heating, Ventilation and Air Conditioning (HVAC) medium or fuel cell air intake medium.

The inventive filter medium moreover can be produced by the inventive method described above.

Taking the example of Premium cabin air media, the technical targets will be summarized in the following table:
The present invention is described in greater detail in the following without limiting the invention to the disclosed embodiments and parameters.

If the present filter medium is configured e.g. as a cabin air filter (such as e.g. a premium cabin air filter media), preferable technical parameters of this medium are as listed in the following table 1:

**Table 1:**

| **Basis weight [g/m²]** | **Premium cabin air media - technical targets** 585 +-55 |
|---|---|
| **Thickness [µm]** | 2600 +- 200 |
| **Air permeability [l/m²/s]** | 1250 +- 300 |
| **efficiency with NaCl, 0,3µm- 20 cm/s** | >80% |
| **n-butane initial breakthrough, 10 cm/s** | <5% |

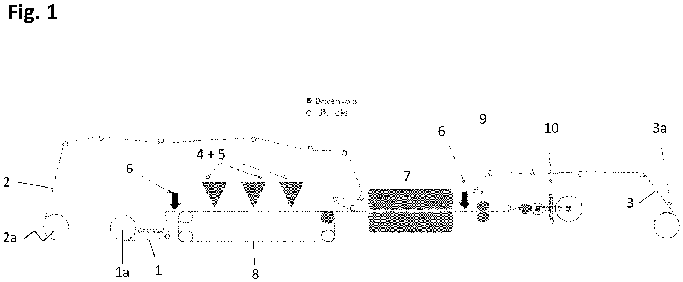

The present invention is further illustrated in figures 1 and two as described below.

Fig. 1 shows an exemplary method for the production of a filter medium according to the present invention including the device of used for its production. A first non-woven support layer 1 is unwound from an unwinder 1a, storing the non-woven support layer 1 in a rolled-up manner. The first non-woven support layer 1 is transported towards a conveyor 8. At the beginning, a liquid adhesive 6 can be sprayed on the upper surface (i. e. the first surface) of the first non-woven support layer 1. Subsequently, a mixture of adsorbent particles 4 as well as particles of a solid adhesive 5 are scattered onto the first surface of the first non-woven support layer 1. After the scattering, a second porous layer 2, unwound by means of a unwinder 2a for the second porous layer is placed on top of the first non-woven support layer 1. This package of layer then is passed through a belt press 7, wherein the solid adhesive is activated by means of the application of elevated temperatures and/or pressure. An efficiency layer 3, unwound from a unwinder 3a for the efficiency layer is placed on top of this joint stack of layers consisting of the first unwoven support layer 1 and the second porous layer 2. Before placing the efficiency layer 3 on top of this package of layers, additional liquid adhesive 6 is sprayed on the upper surface of this package, i. e. on the upper surface of the second porous layer. By means of a calander 9, the third layer is joined on top of this package. The so produced filter medium is finally wound up by a rewinder 10.

In the embodiment according to Fig. 1, the application of liquid adhesive after the belt press and before the application of the efficiency layer 3 is mandatory, the application of liquid adhesive 6 before the scattering of adsorbent particles 4 together with solid adhesive 5, however, optional.

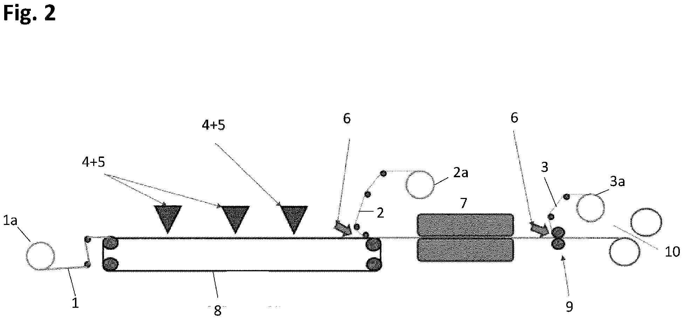

Fig. 2 discloses another preferred embodiment according to the present invention.

Fig. 2 shows another an exemplary method for the production of a filter medium according to the present invention including the device of used for its production. The same reference numerals refer to identical parts as described in context of Fig. 1. In the embodiment according to Fig. 2 the liquid adhesive 6 can be applied after the mixture of adsorbent particles 4 and solid adhesive 5 has been applied as a mixture onto the top surface of the first nonwoven. After the application of the second porous layer, the process is essentially identical with the procedure described in Fig. 1. The following table presents a comparison between 3 products of similar composition but produced with 2 different types of process:
1) one in full glue powder configuration (comparative example 1)
2) two produced in hybrid gluing configuration (inventive examples 1 and 2).

The adopted equipment is: scattering units and belt press from supplier Maschinenfabrik Herbert Meyer GmbH and PUR glueing spraying heads from Nordson Group. As support equipment to the line, we can list unwinders and rewinder from the market, same as a system of mixing and powder storage and distribution.

### Production of Comparative Example 1 in full glue powder configuration

For this example; a 65 gsm spunbond was used as bottom layer on top 350 g/m² of carbon was scattered in a mix with 10% powder EVA glue. Then, 10 g/m² of powder EVA glue was scattered on top of the first carbon/glue powder mix. The combination bottom layer+ carbon + glue powder passed through the belt press to melt EVA glue powder together with charged needle-felt efficiency layer added on top and a gap of 2 mm in the belt press.

### Production of inventive example 1 by hybrid gluing process

For this example; a 65 gsm spunbond was used as bottom layer on top 350g/m² of carbon was scattered in a mix with 10% powder EVA glue. The combination bottom layer+ carbon + glue powder passed through the belt press to melt EVA glue powder, but with a gap of 5 mm. At the exit from the process, PUR glue was sprayed at 10 gsm on top of the mix carbon/ glue powder. Afterward charged needle-felt efficiency layer was put in contact with the combination spunbond/mix carbon and glue powder/ PUR spray thanks to a Calander.

### Production of inventive example 2 by hybrid gluing process

For this example; a 65 gsm spunbond was used as bottom layer on top 400 g/m² of carbon was scattered in a mix with 10% powder EVA glue. The combination bottom layer+ carbon + glue powder passed through the belt press to melt EVA glue powder with a gap of 5 mm. At the outlet from the press, PUR glue was sprayed at 10 gsm on top of the mix carbon/ glue powder. Afterward charged needle-felt efficiency layer was put in contact with the combination spunbond/mix carbon and glue powder/ PUR spray thanks to a Calander.

The properties of the produced filter media are described in the following table 2:

**Table 2**

| | | **Comparative Example 1** | **Inventive Example 1** | **Inventive Example 2** |
|---|---|---|---|---|
| | | **full powder configuration** | **Hybrid configuration** | **Hybrid configuration** |
| Measured | **Basis weight [g/m²]** | 510 | 480 | 560 |
| | **Thickness [µm]** | 1609 | 2477 | 2702 |
| | **Density [kg/m3]** | 317 | 194 | 207 |
| | **Air permeability [l/m²/s]** | 1000 | 1785 | 1447 |
| | **efficiency with NaCl, 0,3µm- 20 cm/s** | 11-27% | 63% | 82.00% |
| | **n-butane initial break-through, 10 cm/s** | 3.3 % | *assumed to be similar as in full powder configuration* | *assumed to be similar as in full powder configuration* |
| Targets | **Basis weight [g/m²]** | 585 +-55 | 585 +-55 | 585 +-55 |
| | **Thickness [µm]** | 2600 +- 200 | 2600 +- 200 | 2600 +- 200 |
| | **Air permeability [l/m²/s]** | 1250 +- 300 | 1250 +- 300 | 1250 +- 300 |
| | **efficiency with NaCl, 0,3µm- 20 cm/s** | >80% (eff. Layer only: 69%) | >80% (eff. Layer only: 69%) | >80% (eff. Layer only: 85%) |
| | **n-butane initial breakthrough, 10 cm/s** | <5% | <5% | <5% |

In table 2 above it becomes apparent that the benefit of hybrid gluing system and thanks to less pressure applied in the belt press and use of PUR glue spray for adhesion between carbon and top efficiency layer, the air permeability increased from 1000 l/m²/s at 200Pa to 1785 l/m²/s. The increase of thickness with the hybrid is another point confirming that overall the media is significantly less compressed.

In addition, the particulate efficiency is significantly higher than in hybrid configuration going from 11-27% in full glue up to 63-82% in hybrid configuration confirming that the process of hybrid gluing protects the charge of the efficiency layer and allowing to meet product targets in case of MD90 as top efficiency layer.

The present invention can be characterized by the following aspects:
1. Method for producing a filter medium containing absorbent particles, comprising the following steps:
   providing a first nonwoven support layer (1),
   applying adsorbent particles onto a first surface of the first nonwoven support layer (1),
   subsequently applying a second porous layer (2) with a first surface thereof onto the first surface of the first nonwoven support layer (1) to form a package of layers, and subsequently
   joining the first nonwoven support layer (1) and the second porous layer (2) to form a stack of joint layers,
   characterized in that a solid adhesive and a liquid adhesive are applied to one or more of the first surface of the first nonwoven support layer (1), the adsorbent particles and/or the first surface of the second porous layer (2).
2. Method according to aspect 1, wherein before applying the second porous layer (2) with its first surface onto the first surface of the first nonwoven support layer (1) the following steps are carried out:
   i. the adsorbent particles are applied together with the solid adhesive as a mixture onto a first surface of the first nonwoven support layer(1),
   ii. optionally, additional solid adhesive is applied onto a first surface of the first nonwoven support layer (1),
   iii. the first nonwoven support layer (1) is treated with pressure and/or elevated temperatures sufficient to activate the solid adhesive,
   iv. applying the liquid adhesive onto the first surface of the first nonwoven support layer (1) and/or on a first surface of a second porous layer (2).
3. Method according to aspect 1, wherein the adhesive application and activation steps are carried out in the following manner and order:
   a) the adsorbent particles are applied together with the solid adhesive as a mixture onto a first surface of the first nonwoven support layer(1),
   b) the liquid adhesive is sprayed onto the first surface of the first nonwoven support layer (1) prior to and/or subsequent to the application of the mixture of the solid adhesive and the adsorbent particles,
   c) the second porous layer (2) with a first surface thereof onto the first surface of the first nonwoven support layer (1) to form a package of layers,
   d) the package is treated with pressure and/or elevated temperatures sufficient to activate the solid adhesive to join the first nonwoven support layer (1) and the second porous layer (2) to form a stack of joint layers.
4. Method according to one of the preceding aspects, characterized in that the solid adhesive and the liquid adhesive differ in their chemical composition.
5. Method according to one of the preceding aspects, characterized in that the solid adhesive is in powder form, with a preferred mean particle size from 100 to 800 µm, especially preferred 250 to 700 µm, measured according to DIN ISO 4610:2002 standard.
6. Method according to one of the preceding aspects, characterized in that
   the solid adhesive is selected form the group consisting of thermoplastic adhesives, which preferably are selected from the group consisting of ethylene-vinyl-acetate (EVA) adhesives, copolyester adhesives, co-polyamide adhesives, thermoplastic urethane (TPU) adhesives and mixtures and combinations of the aforementioned adhesives and/or
   the liquid adhesive is selected from the group consisting of PUR adhesives, polyolefin adhesives and mixtures and combinations of the aforementioned adhesives.
7. Method according to one of the preceding aspects, characterized in that the adsorbent particles and the solid adhesive, especially in powder form, are mixed to form a mixture and said mixture being applied onto the first surface of the first nonwoven support layer (1).
8. Method according to one of the preceding aspects, characterized in that the adsorbent particles
   are selected from the group consisting of activated carbon particles, impregnated activated carbon particles, activated carbon with additional catalytic treatment, ion exchange resin particles, silica particles, zeolite particles, molecular sieve particles, clay, alumina, sodium bicarbonate, catalyst particles, or a combination thereof, and/or
   have a particle size from 30 to 60 mesh and/or
   have a density in between 400 and 800 kg/m³, preferably 450 to 780 kg/m³, especially preferred 460 to 750 kg/m³ measured according to ASTM D2854-09, and/or
   have a CTC value from 45 to 60%, preferably 50 to 55%, measured according to ASTM D5742-16, and/or
   are applied in an amount of 100 to 1100 g/m², preferably 200 to 700 g/m2.
9. Method according to one of the preceding aspects, characterized in that
   the solid adhesive is applied in an amount of 1 wt.-% to 50 wt.-%, preferably 2 wt.-% to 30 wt.-%, especially 5 to 15 wt.-% of an amount of the adsorbent particles and/or
   the liquid adhesive is applied in an amount of 1 to 50 g/m², preferably 5 to 20 g/m², especially preferred 8 to 15 g/m².
10. Method according to one of the aspects 2 to 9, characterized in that
   the elevated temperatures are chosen from a range of 150 °C or above, preferably 150 °C to 250 °C, especially preferred 170 to 230 °C and/or
   the application of pressure is conducted by means of a belt press and/or over a period of 5 to 300 s, preferably 7 to 180 s.
11. Method according to one of the preceding aspects, characterized in that that after the formation of the package of layers or the stack of joint layers additional liquid adhesive is applied
   onto a second surface of the second porous layer (2) being the surface of the second porous layer (2) lying opposite to the layer which is joined with the first side of the first nonwoven support layer (1) and/or
   onto a second surface of the first nonwoven support layer (1) lying opposite of the first surface of the first nonwoven support layer (1)
   and subsequently at least one nonwoven efficiency (3) layer is applied onto the surface which has been applied with liquid adhesive.
12. Filter medium containing adsorbent particles, comprising
   a first nonwoven support layer (1),
   a second porous layer (2) with a first surface thereof onto a first surface of the first nonwoven support layer (1),
   and adsorbent particles enclosed by and/or dispersed in the first nonwoven support layer (1) and the second porous layer (2),
   characterized in that the first nonwoven support layer (1), the second porous layer (2) and the adsorbent particles are adhered together by at least two adhesives which differ in their chemical composition.
13. Filter medium according to the preceding aspect, characterized by
   a content of the adsorbent particles in between 100 to 1000 g/m², preferably 200 to 700 g/m²
   a thickness in between 2000 and 3000 µm, preferably in between 2300 and 2900 µm, measured according to ISO 9073-2:1997,
   an air permeability in between 700 and 1800 l/m²/s, preferably in between 900 and 1600 l/(m²·s), measured at 200 Pa according to the TAPPI Standard T 251 cm-85 ("Air Permeability of Porous Paper, Fabric and Pulp Handsheets") with 0.5 inch (12.7 mm)
   a NaCl efficiency of > 60%, preferably > 80 % measured according to DIN 71460-1:2006 with 20 cm/s and at 0.3-0.5 µm particle size,
   a n-butane initial breakthrough of < 10%, preferably < 5% measured according to ISO 10121-1:2015 with 10 cm/s face velocity and 80 ppm inlet gas concentration, and/or
   a web density of less than 500 kg/m³, preferably less than 300 kg/m³, more preferably less than 225 kg/m³.
14. Filter medium according to one of the aspects 12 to 13, comprising at least one nonwoven efficiency layer (3) being present
   on a second surface of the second porous layer (2) being the surface of the second porous layer (2) lying opposite to the layer which is joined with the first side of the first nonwoven support layer (1) and/or
   on a second surface of the first nonwoven support layer (1) lying opposite of the first surface of the first nonwoven support layer (1).
15. Filter medium according to one of the aspects 12 to 14, being part of a combi cabin air media, molecular heating, Ventilation and Air Conditioning (HVAC) medium or fuel cell air intake medium.
16. Filter medium according to one of the aspects 12 to 15, producible by a method according to one of aspects 1 to 11.
17. Use of a filter medium according to one of the aspects 12 to 16 for combi cabin air media, molecular heating, a Ventilation and Air Conditioning (HVAC) medium or a fuel cell air intake medium.

## Claims

1. Method for producing a filter medium containing absorbent particles, comprising the following steps:
providing a first nonwoven support layer (1),
applying adsorbent particles onto a first surface of the first nonwoven support layer (1),
subsequently applying a second porous layer (2) with a first surface thereof onto the first surface of the first nonwoven support layer (1) to form a package of layers, and subsequently
joining the first nonwoven support layer (1) and the second porous layer (2) to form a stack of joint layers,
**characterized in that** a solid adhesive and a liquid adhesive are applied to one or more of the first surface of the first nonwoven support layer (1), the adsorbent particles and/or the first surface of the second porous layer (2).

2. Method according to claim 1, wherein before applying the second porous layer (2) with its first surface onto the first surface of the first nonwoven support layer (1) the adhesive application and activation steps are carried out in the following manner:
i. the adsorbent particles are applied together with the solid adhesive as a mixture onto a first surface of the first nonwoven support layer (1),
ii. optionally, additional solid adhesive is applied onto a first surface of the first nonwoven support layer (1),
iii. the first nonwoven support layer (1) is treated with pressure and/or elevated temperatures sufficient to activate the solid adhesive,
iv. the liquid adhesive is applied onto the first surface of the first nonwoven support layer (1) and/or on a first surface of a second porous layer (2).

3. Method according to claim 1, wherein the adhesive application and activation steps are carried out in the following manner and order:
i. the adsorbent particles are applied together with the solid adhesive as a mixture onto a first surface of the first nonwoven support layer (1),
ii. the liquid adhesive is sprayed onto the first surface of the first nonwoven support layer (1) prior to and/or subsequent to the application of the mixture of the solid adhesive and the adsorbent particles,
iii. the second porous layer (2) with a first surface thereof onto the first surface of the first nonwoven support layer (1) to form a package of layers,
iv. the package is treated with pressure and/or elevated temperatures sufficient to activate the solid adhesive to join the first nonwoven support layer (1) and the second porous layer (2) to form a stack of joint layers.

4. Method according to one of the preceding claims, **characterized in that** the solid adhesive and the liquid adhesive differ in their chemical composition.

5. Method according to one of the preceding claims, **characterized in that** the solid adhesive is in powder form, with a preferred mean particle size from 100 to 800 µm, especially preferred 250 to 700 µm, measured according to DIN ISO 4610:2002 standard.

6. Method according to one of the preceding claims, **characterized in that** the solid adhesive is selected form the group consisting of thermoplastic adhesives, which preferably are selected from the group consisting of ethylene-vinyl-acetate (EVA) adhesives, copolyester adhesives, co-polyamide adhesives, thermoplastic urethane (TPU) adhesives and mixtures and combinations of the aforementioned adhesives and/or
the liquid adhesive is selected from the group consisting of PUR adhesives, polyolefin adhesives and mixtures and combinations of the aforementioned adhesives.

7. Method according to one of the preceding claims, **characterized in that** the adsorbent particles and the solid adhesive, especially in powder form, are mixed to form a mixture and said mixture being applied onto the first surface of the first nonwoven support layer (1).

8. Method according to one of the preceding claims, **characterized in that** the adsorbent particles
are selected from the group consisting of activated carbon particles, impregnated activated carbon particles, activated carbon with additional catalytic treatment, ion exchange resin particles, silica particles, zeolite particles, molecular sieve particles, clay, alumina, sodium bicarbonate, catalyst particles, or a combination thereof, and/or
have a particle size from 30 to 60 mesh and/or
have a density in between 400 and 800 kg/m³, preferably 450 to 780 kg/m³, especially preferred 460 to 750 kg/m³ measured according to ASTM D2854-09, and/or
have a CTC value from 45 to 60%, preferably 50 to 55%, measured according to ASTM D5742-16, and/or
are applied in an amount of 100 to 1100 g/m², preferably 200 to 700 g/m2.

9. Method according to one of the preceding claims, **characterized in that**
the solid adhesive is applied in an amount of 1 wt.-% to 50 wt.-%, preferably 2 wt.-% to 30 wt.-%, especially 5 to 15 wt.-% of an amount of the adsorbent particles and/or
the liquid adhesive is applied in an amount of 1 to 50 g/m², preferably
5 to 20 g/m², especially preferred 8 to 15 g/m².

10. Method according to one of the claims 2 to 9, **characterized in that** the elevated temperatures are chosen from a range of 150 °C or above, preferably 150 °C to 250 °C, especially preferred 170 to 230 °C.

11. Method according to one of the preceding claims, **characterized in that** that after the formation of the package of layers or the stack of joint layers additional liquid adhesive is applied
onto a second surface of the second porous layer (2) being the surface of the second porous layer (2) lying opposite to the layer which is joined with the first side of the first nonwoven support layer (1) and/or
onto a second surface of the first nonwoven support layer (1) lying opposite of the first surface of the first nonwoven support layer (1)
and subsequently at least one nonwoven efficiency (3) layer is applied onto the surface which has been applied with liquid adhesive.

12. Filter medium containing adsorbent particles, comprising
a first nonwoven support layer (1),
a second porous layer (2) with a first surface thereof onto a first surface of the first nonwoven support layer (1),
and adsorbent particles enclosed by and/or dispersed in the first nonwoven support layer (1) and the second porous layer (2),
**characterized in that** the first nonwoven support layer (1), the second porous layer (2) and the adsorbent particles are adhered together by at least two adhesives which differ in their chemical composition.

13. Filter medium according to the preceding claim, **characterized by**
a content of the adsorbent particles in between 100 to 1000 g/m², preferably 200 to 700 g/m² and/or
a thickness in between 2000 and 3000 µm, preferably in between 2300 and 2900 µm, measured according to ISO 9073-2:1997, and/or an air permeability in between 700 and 1800 l/m²/s, preferably in between 900 and 1600 l/(m²·s), measured at 200 Pa according to the TAPPI Standard T 251 cm-85 ("Air Permeability of Porous Paper, Fabric and Pulp Handsheets") with 0.5 inch (12.7 mm) and/or
a NaCl efficiency of > 60%, preferably > 80 % measured according to DIN 71460-1:2006 with 20 cm/s and at 0.3-0.5 µm particle size, and/or
a n-butane initial breakthrough of < 10%, preferably < 5% measured according to ISO 10121-1:2015 with 10 cm/s face velocity and 80 ppm inlet gas concentration, and/or
a web density of less than 500 kg/m³, preferably less than 300 kg/m³, more preferably less than 225 kg/m³.

14. Filter medium according to one of the claims 12 to 13, comprising at least one nonwoven efficiency layer (3) being present on a second surface of the second porous layer (2) being the surface of the second porous layer (2) lying opposite to the layer which is joined with the first side of the first nonwoven support layer (1) and/or on a second surface of the first nonwoven support layer (1) lying opposite of the first surface of the first nonwoven support layer (1).

15. Filter medium according to one of the claims 12 to 14, being part of a combi cabin air media, molecular heating, Ventilation and Air Conditioning (HVAC) medium or fuel cell air intake medium.

16. Filter medium according to one of the claims 12 to 15, producible by a method according to one of claims 1 to 11.

17. Use of a filter medium according to one of the claims 12 to 16 for combi cabin air media, molecular heating, a Ventilation and Air Conditioning (HVAC) medium or a fuel cell air intake medium.
